# EUROPEAN PATENT APPLICATION

(11) **EP 2 070 607 A2**
(43) Date of publication of application: **17.06.2009**
(21) Application number: 08171445.3
(22) Date of filing: 12.12.2008
(51) Int. Cl.: B09C 1/00

(54) **System and method for reclamation of subsoil**

(30) Priority: 13.12.2007 IT MO20070391
(71) Applicant: 3000 S.r.l., 40127 Bologna (IT)
(72) Inventor: Caridei, Francesco, 40127, Bologna (IT); Molinari, Mauro, 00184, Roma (IT); Rizzitiello, Daniela, 00184, Roma (IT)
(74) Representative: Crugnola, Pietro

(57) **Abstract**

A system for reclaiming a subsoil (20) containing polluting compounds, in particular volatile and/or non-volatile organic compounds, comprises a well (2) extending through an unsaturated zone (21) and an underlying saturated zone (22) of said subsoil (20), air-generating means (16) for sending to said saturated zone (22) air (A) suitable for removing said polluting compounds and transferring said polluting compounds to said unsaturated zone (21), sucking means (18) for sucking through said well (2) contaminated air (V) containing said polluting compounds and coming from said unsaturated zone (21), air-treatment means (30) arranged for extracting from said contaminated air (V) said polluting compounds and for providing said air-generating means (18) with said air (A) to be sent again to said well (2).

## Description

The present invention relates to systems and methods for reclaiming subsoil, in particular it relates to a system and a method for reclaiming saturated and unsaturated zones of the subsoil of sites contaminated by polluting compounds.

The reclamation of the groundwater contaminated by polluting compounds, typically volatile or semivolatile organic compounds, occurs by causing desorption, or stripping, of said compounds, i.e. the transfer of said compounds dissolved in a liquid (groundwater) from a liquid to a gas phase.

Reclamation systems are known that enable stripping of the polluting compounds dissolved in an aquifer to be achieved by using air that is introduced into the subsoil through a well and is made to bubbled in the subsoil, in particular at a saturated thickness of the subsoil.

The air is then extracted from the inside of the well, for example via a vacuum pump that directs the air towards the external environment. The vacuum inside the well causes a local rise in the water table and a double windowing made in the well enables a vertical circulating motion to be started inside the aquifer.

This system and method is in fact effective only in limited portions of the subsoil at the well.

Other known reclamation systems provide injecting pressurised air below the water table through one or more vertical wells. The air, rising upwards, removes the volatile polluting compounds found in the aquifer. In order to enable the air enriched with the volatile contaminants to be extracted, it is nevertheless necessary to create a vacuum in the unsaturated layers of the subsoil, using suitable suction wells, or horizontal suction lines, and vacuum-generating units. The extracted air flow is purified, for example, by a process of adsorption on active carbon, catalytic oxidation or other known techniques that enable the emissions to be discharged into the atmosphere according to the limits prescribed by law.

A drawback of such reclamation systems consists of the high costs necessary for making the delivery wells delivering the air and the suction wells.

Another drawback of both the aforesaid reclamation systems consists of the fact that the air purified from the polluting compounds, being led directly into the atmosphere, causes the contamination to be transferred from the subsoil to the atmosphere, depending on the efficacy of the filtering devices and on the corresponding authorisations according to the provisions of legal regulations.

Further, the emission into the atmosphere entails the burden and consequent responsibility to obtain specific authorisation to discharge into the atmosphere contaminants that is associated with the risk of possible contamination in the event of faults or malfunctions of the filtering means.

An object of the present invention is to improve known systems and methods for reclaiming the subsoil of sites contaminated by polluting compounds, in particular for reclaiming underground aquifers.

Another object is to obtain a system and a method that enable volatile and semivolatile organic compounds to be extracted effectively from contaminated subsoil and to recover contaminated air containing said compounds by extracting from unsaturated zones of said subsoil, limiting and simplifying the filtration and purification procedures.

A further object is to achieve a system and a method that are simple and cheap to be achieved, and are in particular applicable to sites provided with pre-existing wells or piezometric monitoring.

Still another object is to obtain a system that is usable at various depths, but is particularly efficient for purifying aquifers down to 15 metres in depth.

In a first aspect of the invention there is provided a system for reclaiming a subsoil containing polluting compounds, in particular volatile and/or non-volatile organic compounds, comprising at least a well extending through an unsaturated zone and an underlying saturated zone of said subsoil, air-generating means for sending to said saturated zone air suitable for removing said polluting compounds and transferring the polluting compounds to said unsaturated zone, sucking means for sucking through said well contaminated air containing said polluting compounds and coming from said unsaturated zone, characterised in that the system comprises air-treatment means arranged for extracting from said contaminated air said polluting compounds and providing said air-generating means with said purified air to be sent again to said reclaiming well.

In a second aspect of the invention there is provided a method for reclaiming a subsoil comprising an unsaturated zone and an underlying saturated zone, at least said underlying saturated zone containing polluting compounds, in particular volatile and/or non-volatile organic compounds, comprising sending at least to said saturated zone air suitable for removing said polluting compounds and transferring the polluting compounds to said unsaturated zone, sucking contaminated air containing said polluting compounds and coming from said unsaturated zone, characterised in that the method comprises filtering said contaminated air for extracting said polluting compounds and obtaining purified air to be sent again to said saturated zone.

Owing to these aspects of the invention it is thus possible to obtain a system and a method for reclaiming a contaminated subsoil that enable the procedures for filtering and purifying air to be significantly simplified. The contaminated air extracted from the subsoil, after being first filtered and purified of the contaminating compounds, is in fact sent again to the subsoil to perform removal by stripping further contaminating compounds. This closed cycle of the air does not comprise any emission into the atmosphere, thus reducing risks of possible contamination in an external environment due to faults or malfunctions of the filtering means and any other burden of obtaining the corresponding authorisations for the release into the atmosphere prescribed by environmental legislation.

The system further heats the air to be lead into the subsoil by a set temperature value, for example comprised between 60-90°C to enable more efficient and faster removal of the polluting compounds found in the subsoil.

The system can be devised using already existing wells, without the need to make a specific reclaiming well.

The invention can be better understood and implemented with reference to the attached drawings, that illustrate an embodiment thereof by way of non-limiting example, in which:
Figure 1 is a schematic section of the reclamation system of the invention inserted into a subsoil to be reclaimed;
Figure 2 is an enlarged and partial section of a reclamation well of the system in Figure 1;
Figure 3 is a partial enlarged section of a pipe of the well in Figure 2, showing separating means, Figure 4 is a section like that in Figure 1, showing a version of the system.

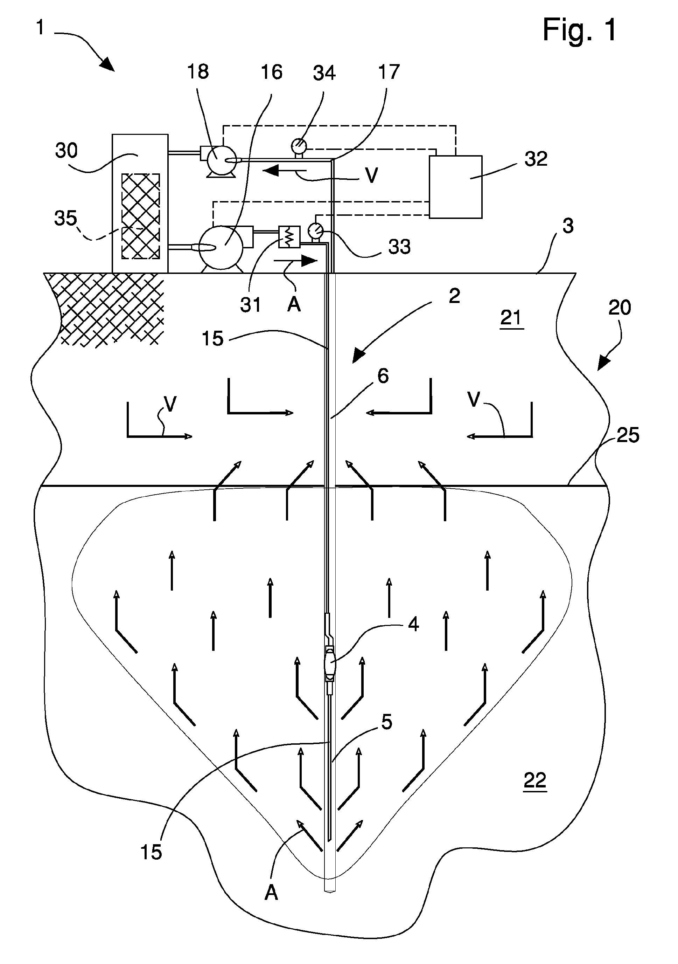

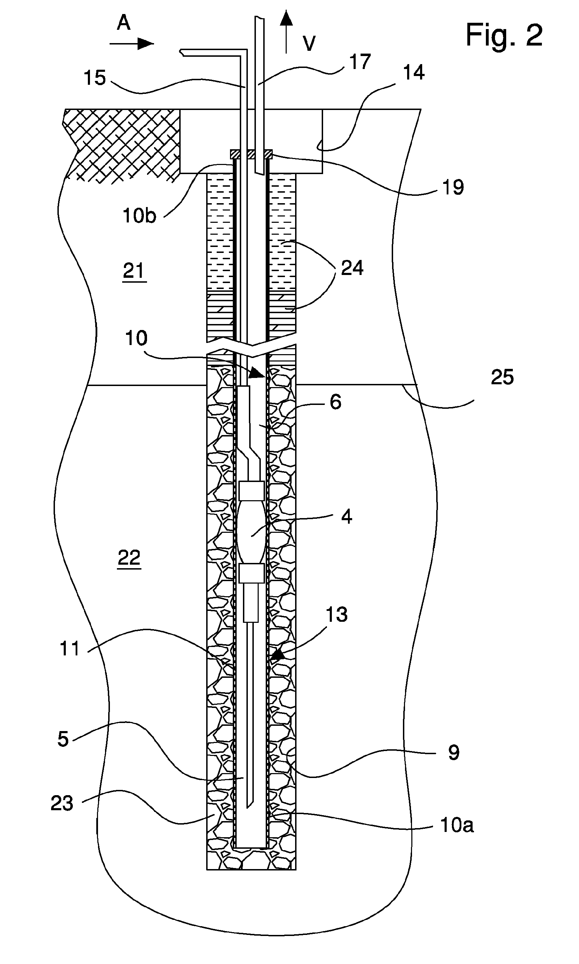

With reference to Figures 1 and 2, there is schematically illustrated a system 1 for reclaiming a subsoil 20, comprising at least a well 2 that extends from a surface 3 in atmosphere through an unsaturated zone 21 and a saturated zone 22 of said subsoil 20, at least said saturated zone 22 containing polluting compounds to be extracted, in particular volatile and semivolatile organic compounds such as, for example, hydrocarbons and organic chloride compounds.

The length of this well is comprised between 2 and 30m, in particular about 15m.

The well 2 comprises a pipe 10, made of metal or of plastics, inserted inside a boring hole 9 of said well 2. The pipe 10 has a diameter comprised between 5 and 20 cm, in particular about 15 cm (6").

Separating means 4 is arranged inside the pipe 10 for sealingly separating a cavity or lower hollow portion 5, at said saturated zone 22, and an upper cavity or upper hollow portion 6. Both cavities 5, 6 of the pipe 10 are connected to the surrounding subsoil via openings 12, so-called windows, made on a passage portion 13 of a side wall 11 of said pipe 10. This passage portion 13 extends substantially from a bottom end 10a of said pipe 10 further from the surface 3 as far as a defined distance, in particular 1-3 m, from the remaining head end 10b located at the surface 3.

The vertical position of the separating means 4 can be modified, lower or higher, to extract better the volatile and semivolatile compounds.

The lower cavity 5 of pipe 10 is connected via a first conduit 15 to air-generating means 16, comprising, for example a blower or a compressor.

The upper cavity 6 of the well 1, which extends from the separating means 4 to the surface 3, is connected by a second conduit 17 to air sucking means 18, comprising for example an aspirator or a vacuum pump.

In this manner, as explained in greater detail below in the description, air A blown inside the well 2 into the lower cavity 5 of the pipe 10 can spread through the openings 12 into the saturated zone 22. This air A, as it spreads in the saturated zone 22, reclaims the groundwater that are present in the saturated zone 22 and are contaminated by the polluting compounds via a stripping process.

The shape, dimension and distribution of the openings 12 depend on the type of subsoil 20 and/or on the flow rate of blown air A.

From the upper cavity 6 via the openings 12 a vacuum is created inside the well 2 in the unsaturated zone 21 that enables the contaminated air V to be sucked and extracted.

With particular reference to Figure 2, which illustrates a possible embodiment of the well 2, the head end 10b of the pipe 10 is fixed to a sump 14 and is sealingly closed by a cover 19 through which the two conduits 15, 17 pass.

Between the pipe 10 and the size walls of the boring hole 9 various materials can be inserted. Filtering material 23, for example class siliceous gravel and/or fine sand, is inserted into the lower part of the well 2 at the passage portion 13 of the side wall 11 of the pipe 10. Consolidation material 24, such as cement and/or bentonite is on the other hand inserted into the upper part of the well 2, further away from the saturated and unsaturated zone.

The system 1 further comprises treatment means 30 for treating the air connected to the conduits 15, 17 and arranged for purifying the contaminated air V exiting the well 2. The purified air A exiting the treatment means 30 is then sent via air-generating means 16 inside the well 2.

The reclamation system 1 of the invention thus enables a closed cycle of the air used for stripping the polluting compounds to be achieved, preventing emissions and discharges into the atmosphere.

The treatment means 30 for treating the air comprises filtering means 35, for example active carbon filters or catalytic oxidation filters.

The system 1 further comprises heating means 31 arranged for heating the air exiting the air-generating means 16 generating pressurised air, with respect to ambient temperature, for example up to a temperature comprised between 60-90°C.

In a version of the system 1 that is not illustrated, the heating means is integrated into the air-generating means, comprising for example a compressor that is able to compress and at the same time heat the air.

The hot air blown into the well 2 enables the polluting compounds in the subsoil 20 to be removed more efficiently and faster.

Controlling means 32 is also provided for adjusting the operation of the air-generating means 16 for generating pressurised air, of the sucking means 18 and possibly of the heating means 31. Sensor means 33, 34 is inserted into the conduits 15, 17 and connected to the controlling means 32 to send to the controlling means 32 signals relating to the pressure of the air. On the basis of these signals the controlling means 32 is able to adjust the operation of the air-generating means 16 for generating pressurised air 16 and of the sucking means 18 for obtaining the required pressure values.

Further sensor means can be provided for detecting possible clogging of the filtering means 35 of the air-treatment means 30 and sending a corresponding signal to the controlling means 32 to generate an alarm and/or stop the system 1.

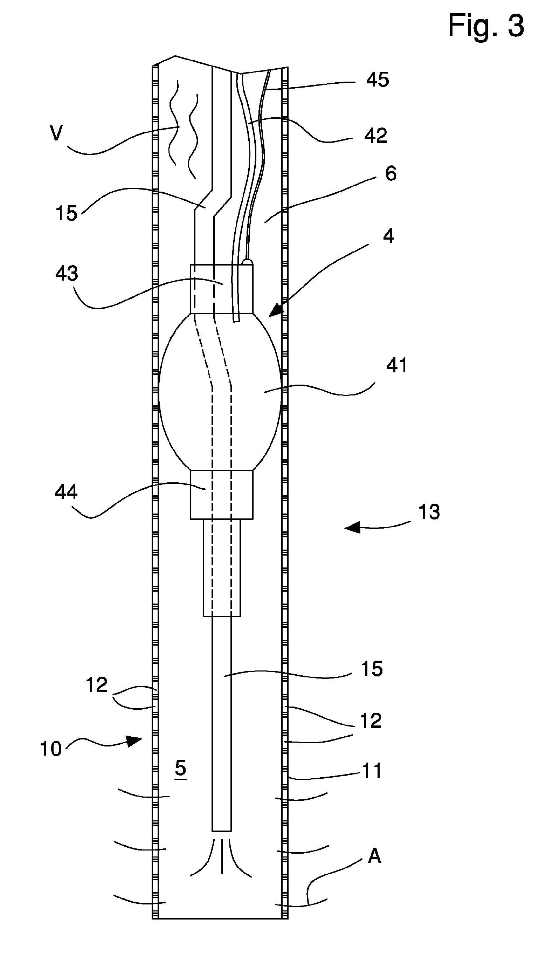

With particular reference to Figure 3, the separating means 4 comprises, for example, an occlusion device, so-called "packer" (Figure 3), comprising an elastic central body 41, that is pneumatically expandable to adhere sealingly to the side wall 11 of the pipe 10. An inflating pipe 42 enables said elastic central body 41 to be selectively inflated and deflated.

The first supply conduit 15 supplying the air A longitudinally passes through the central body 41. Sealing sleeves 43, 44 arranged at opposite ends of the central body 41 permit the passage of the first conduit 15 and of the inflating pipe 42.

An operating cable 45 enables the separating means 4 to be lowered into or lifted from the reclamation well 2.

Using the occlusion device 4 enables already existing wells to be used without the need to make a specific reclamation well.

In a version of the system 1 that is not shown in the figures, the separating means 4 comprises an insulating baffle fixed inside the pipe 10, provided with a hole for the passage of the first conduit 15.

The operation of the reclamation system 1 of the invention provides for the delivery of the air A through the well 2 in the subsoil 20 up to the base of the contaminated aquifer to achieve the transfer of the contaminants from the saturated zone 22 of the subsoil, the so-called liquid matrix, to the unsaturated zone 21, the so-called air matrix. The aforesaid transfer occurs via a process of desorption, or stripping, which enables the polluting compounds to be separated from the water. The volatile and semivolatile polluting compounds are transferred vertically linked to the air as far as the interface 25 between the saturated zone 22 and the unsaturated zone 21 of the subsoil 20, where they are sucked through the gaps of the ground from the pipe 10.

In the upper cavity 6 of the pipe 10 and in the zone near the upper cavity 6 there is, in fact, a vacuum created by the sucking means 18. The contaminated air V is thus sucked and extracted from the subsoil 20 via the upper cavity 6, the second conduit 17 and the sucking means 18 as far as the air-treatment means 30.

The filtering means 35 of the said air-treatment means 30 enables the polluting compounds to be extracted from the contaminated air V. The adsorption capacities of the filtering means 35 depend on the type and on the dimensions of the filtering means 35.

In the case of contaminated subsoil of great extent, the reclamation system 1 may comprise a plurality of wells 2 that are suitably distributed and spaced apart from one another, that are connected by respective first conduits 15 and second conduits 17 respectively to the air-generating means 16 and to the air-treatment means 30.

Alternatively, each reclamation well 2 can be associated with respective air-generating means and air-treatment means.

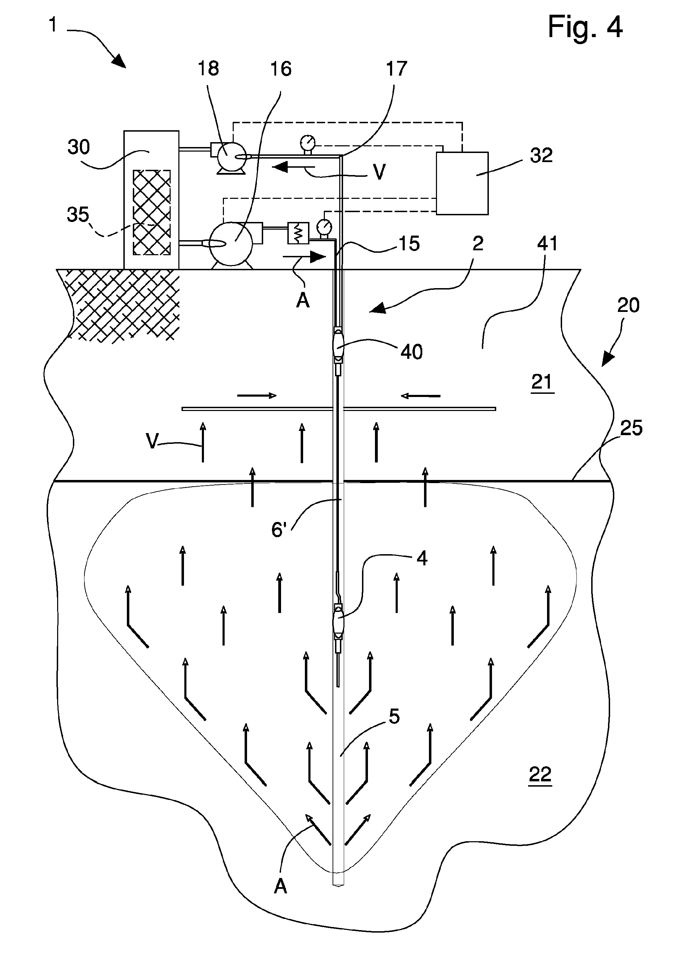

With reference to Figure 4, there is illustrated a version of the reclamation system 1 that differs from the previously disclosed embodiment through the fact that it comprises further separating means 40 inserted inside the pipe 10 above the separating means 4, so as to form with the separating means 4 said upper cavity 6'. The further separating means 40 is substantially identical to the separating means 4 and comprises, for example, a pneumatic "packer" occlusion device.

The further separating means 40, by defining an upper cavity 6' with a smaller volume, enables the contaminated air V to be extracted better from the interface 25 between the saturated zone 22 and the unsaturated zone 21 of the subsoil 20.

This version of the system 1 further comprises one or more sucking pipes 41 arranged, for example horizontally, in the unsaturated zone 21 and flowingly connected to the upper cavity 6' of the pipe 10, in which cavity 6' a vacuum is created by the sucking means 18. In this manner the sucking pipes 41 enable the contaminated air V to be sucked more effectively from said unsaturated zone 21. The sucking pipes 41 are arranged, for example, radially around said pipe 10.

## Claims

1. System for reclaiming a subsoil (20) containing polluting compounds, in particular volatile and/or non-volatile organic compounds, comprising at least a well (2) extending through an unsaturated zone (21) and an underlying saturated zone (22) of said subsoil (20), air-generating means (16) for sending to said saturated zone (22) air (A) suitable for removing said polluting compounds and transferring said polluting compounds to said unsaturated zone (21), sucking means (18) for sucking through said well (2) contaminated air (V) containing said polluting compounds and coming from said unsaturated zone (21), **characterised in that** said system comprises air-treatment means (30) arranged for extracting from said contaminated air (V) said polluting compounds and for providing said air-generating means (18) with said purified air (A) to be sent again to said well (2).

2. System according to claim 1, wherein said well (2) comprises at least a pipe (10) internally provided with a lower cavity (5) and an upper cavity (6; 6'), that are separate from one another, said lower cavity (5) and said upper cavity (6; 6') being connected to said saturated zone (22) and to said unsaturated zone (21) by a plurality of openings (12) of said pipe (10).

3. System according to claim 2, wherein said lower cavity (5) is supplied with said air (A) by said air-generating means (16), via a first conduit (15).

4. System according to claim 2 or 3, wherein said upper cavity (6; 6') is connected to said sucking means (18) by a second conduit (15) for extracting said contaminated air (V).

5. System according to any one of claims 2 to 4, wherein said openings (12) are made on a passage portion (13) of a side wall (11) of said pipe (10).

6. System according to claim 5, wherein said passage portion (13) extends through said saturated zone (22) and partially through said unsaturated zone (21).

7. System according to any one of claims 4 to 6, as claim 5 is appended to claim 4, comprising sucking pipe means (41) arranged in said unsaturated zone (21) and flowingly connected to said upper cavity (6; 6') so as to suck said contaminated air (V) from said unsaturated zone (21).

8. System according to claim 7, wherein said sucking pipe means (41) comprises a plurality of sucking pipes fixed radially around said pipe (10).

9. System according to any one of claims 2 to 8, comprising separating means (4) arranged for sealingly separating said lower cavity (5) and said upper cavity (6; 6').

10. System according to claim 9, comprising further separating means (40) arranged inside said pipe (10) above said separating means (4) for forming with said separating means (4) said upper cavity (6').

11. System according to claim 9 or 10, wherein said separating means (4; 40) comprises an occlusion device that is insertable inside said pipe (10) and expandable so as to adhere sealingly to said side wall (11).

12. System according to claim 11, wherein said packer comprises an elastic central body (41) that is inflatable, in particular pneumatically.

13. System according to claim 9, wherein said separating means (4) comprises at least an insulating baffle fixed inside said pipe (10).

14. System according to any preceding claim, comprising heating means (31) arranged for heating said air (A) exiting said air-generating means (16) by a set value, in particular comprised between 60-90°C.

15. System according to any preceding claim, wherein said air-generating means (16) comprises at least a blower or a compressor.

16. System according to claim 15, as appended to claim 14, wherein said heating means (31) is integrated into said air-generating means (16).

17. System according to any preceding claim, wherein said sucking means (18) comprises at least an aspirator or vacuum pump.

18. System according to any preceding claim, wherein said air-treatment means (30) comprises filtering means (35), in particular active carbon filters.

19. System according to any preceding claim, comprising controlling means (32) for controlling and adjusting the operation at least of said air-generating means (16) and of said sucking means (18).

20. System according to claim 19, comprising sensor means (33, 34) arranged for detecting a delivery pressure of said air-generating means (A) and a sucking pressure of said sucking means (18) and for sending data relating to said delivery pressure and to said sucking pressure to said controlling means (32).

21. System according to claim 19 or 20, as claim 19 is appended to claim 18, comprising further sensor means for detecting possible clogging of said filtering means (33) and sending a corresponding signal to said controlling means (32).

22. Method for reclaiming a subsoil (20) comprising an unsaturated zone (21) and an underlying saturated zone (22), at least said underlying saturated zone (22) containing polluting compounds, in particular volatile and/or non-volatile organic compounds, comprising sending at least to said saturated zone (22) air (A) suitable for removing said polluting compounds and transferring said polluting compounds to said unsaturated zone (21), sucking contaminated air (V) containing said polluting compounds and coming from said unsaturated zone (21), **characterised in that** said method comprises filtering said contaminated air (V) for extracting said polluting compounds and obtaining purified air (A) to be sent again to said saturated zone (22).

23. Method according to claim 22, wherein said sending and said sucking are achieved by at least a well (2) extending through said unsaturated zone (21) and said saturated zone (22) and internally provided with a lower cavity (5) and an upper cavity (6; 6'), that are sealingly separated from one another, said lower cavity (5) and said upper cavity (6; 6') being connected to said saturated zone (22) and to said unsaturated zone (21) by a plurality of openings (12) of said well (2).

24. Method according to claim 23, wherein said sending comprises sending said air (A) into said lower cavity (5) .

25. Method according to claim 23 or 24, wherein said sucking comprises sucking said contaminated air (V) from said upper cavity (6; 6').

26. Method according to any one of claims 22 to 25, comprising before said sending heating said air (A) by a set value, in particular comprised between 60-90°C.
